# FASCICULE DE BREVET EUROPEEN

(11) **EP 3 460 635 B1**
(45) Date de publication et mention de la délivrance du brevet: **08.01.2020**
(21) Numéro de dépôt: 18190905.2
(22) Date de dépôt: 27.08.2018
(51) Int. Cl.: G06F 3/02, G06F 3/023, H01H 13/70, G05F 1/46, G06F 13/10, H01H 13/83

(54) **MODULE DE COMMANDE POUR SYSTÈME DE DIALOGUE HOMME-MACHINE**
STEUERUNGSMODUL FÜR MENSCH-MASCHINEN-DIALOGSYSTEM
CONTROL MODULE FOR HUMAN-MACHINE DIALOGUE SYSTEM

(30) Priorité: 25.09.2017 FR 1771013
(43) Date de publication de la demande: 27.03.2019
(73) Titulaire: Schneider Electric Industries SAS, 92500 Rueil-Malmaison (FR)
(72) Inventeur: DALLET, Hervé, 16800 SOYAUX (FR); CHAUVET, Francis, 16440 MOUTHIERS (FR)
(74) Mandataire: Dufresne, Thierry

(56) Documents cités:
- EP-A1- 3 035 166

## Description

### Domaine technique de l'invention

La présente invention se rapporte à un module de commande pour système de dialogue homme-machine disposant de plusieurs organes de dialogue homme-machine amovibles et interchangeables et au système de dialogue homme-machine intégrant ledit module de commande.

### Etat de la technique

Un système de dialogue homme-machine est déjà connu de la demande de brevet EP3035166A1**.** Cette demande de brevet décrit une solution qui comporte un module maître et plusieurs organes de dialogue homme-machine connectés audit module maître. Chaque organe de dialogue homme-machine comporte un élément fonctionnel comprenant au moins un indicateur de signalisation et/ou au moins un contact électrique. Pour assurer une commande de l'indicateur de signalisation et une lecture de l'état du contact électrique connectés en parallèle dans un même élément fonctionnel, le module maître met en place un contrôle asynchrone dans lequel il alterne des périodes dites d'écriture pendant lesquelles il commande l'état de l'indicateur de signalisation et des périodes dites de lecture pendant lesquelles il vérifie l'état du contact électrique de l'organe. Lors d'une période de lecture, le module maître applique une tension d'un premier signe pour lire l'état du contact électrique et lors d'une période d'écriture, le module maître applique une tension de signe opposée pour commander l'allumage ou l'extinction de l'indicateur.

Si cette solution de commande s'avère satisfaisante, elle peut ne pas être adaptée aux contraintes de fonctionnement des différents composants qui sont employés.

Un but de l'invention est donc de proposer un module de commande qui permette d'assurer un fonctionnement du système de dialogue homme-machine qui est adapté aux contraintes du système.

### Exposé de l'invention

Ce but est atteint par un module de commande pour système de dialogue homme-machine, ledit système comprenant plusieurs organes de dialogue homme-machine, chaque organe de dialogue homme-machine comprenant un élément fonctionnel qui comporte au moins un contact électrique et/ou un indicateur de signalisation. Ledit module de commande comprend un microcontrôleur destiné à être connecté à une première source d'alimentation, une ligne de commun destinée à relier le microcontrôleur à tous les éléments fonctionnels et plusieurs lignes de commande destinées chacune à relier le microcontrôleur à un élément fonctionnel d'un organe de dialogue homme-machine distinct. Ledit module de commande est configuré pour fonctionner dans un mode écriture pour attribuer un état à chaque indicateur de signalisation de chaque organe de dialogue homme-machine et dans un mode lecture pour lire un état du contact électrique de chaque organe de dialogue homme-machine.

Ledit mode écriture est appliqué en plaçant ladite ligne de commun à un premier potentiel électrique et ledit mode lecture est appliqué en plaçant ladite ligne de commun à un deuxième potentiel électrique, distinct du premier potentiel électrique. Le module de commande se caractérise en ce qu'il comporte, pour chaque ligne de commande d'un organe de dialogue homme-machine, au moins un bloc d'alimentation destiné à être relié à une deuxième source d'alimentation et connecté à ladite ligne de commande dudit organe de dialogue homme-machine. Ledit microcontrôleur est alors configuré pour activer ou désactiver chaque bloc d'alimentation dans ledit mode écriture en changeant le potentiel électrique affecté à la ligne de commande associée et pour lire l'état du contact électrique de chaque organe de dialogue homme-machine sur la ligne de commande associée dans ledit mode lecture.

Selon une particularité, le bloc d'alimentation comporte un générateur de courant et un bloc de commande dudit générateur de courant, connecté entre le générateur de courant et la ligne de commande associée.

Selon une autre particularité, le bloc de commande comporte un transistor présentant une base connectée à la ligne de commande à travers une résistance.

Selon une autre particularité, le générateur de courant est connecté entre deux lignes d'alimentation formant la deuxième source d'alimentation, une première ligne d'alimentation à potentiel électrique non nul et une ligne de référence à potentiel électrique nul.

Selon une autre particularité, le module de commande comporte une résistance de rappel connectée à la ligne de commande et à la ligne de référence.

Selon une autre particularité, le microcontrôleur est connecté à ladite ligne de référence et à une deuxième ligne d'alimentation, formant la première source d'alimentation électrique.

Selon une autre particularité, le module de commande comporte une résistance dite de lecture placée en série sur la ligne de commande.

L'invention concerne également un système de dialogue homme-machine comprenant un module de commande et plusieurs organes de dialogue homme-machine connectés audit module de commande, chaque organe de dialogue homme-machine comprenant un élément fonctionnel doté d'un contact électrique et/ou d'un indicateur de signalisation, entre une première borne connectée à une ligne de commun et une deuxième borne connectée à une ligne de commande distincte générée par ledit module de commande, ledit module de commande étant tel que défini ci-dessus.

Selon une particularité, les organes de dialogue homme-machine sont connectés audit module de commande par un câblage torsadé.

Selon une autre particularité, l'indicateur est de type lumineux et comporte au moins une diode électroluminescente.

Selon une autre particularité, chaque organe de dialogue homme-machine comporte une diode connectée en série avec un contact électrique lorsque celui-ci est présent.

### Brève description des figures

D'autres caractéristiques et avantages vont apparaître dans la description détaillée qui suit, faite en regard des dessins annexés listés ci-dessous :
- La figure 1 représente, de manière schématique un système de dialogue homme-machine conforme à l'invention ;
- La figure 2 représente de manière schématique, un module de commande conforme à l'invention ; Sur cette figure, seules deux lignes de commande sont représentées ;
- La figure 3 représente un module de commande conforme à l'invention associé à un organe de dialogue homme-machine ; Sur cette figure, pour simplifier le schéma, seule une ligne de commande est représentée ;
- Les figures 4A à 4D représentent les différents cas de fonctionnement du système dans le mode écriture ;
- Les figures 5A et 5B représentent les différents cas de fonctionnement du système dans le mode lecture ; Sur ces figures, pour mieux comprendre l'invention, le schéma est inversé pour conserver les conventions de notation.

### Description détaillée d'au moins un mode de réalisation

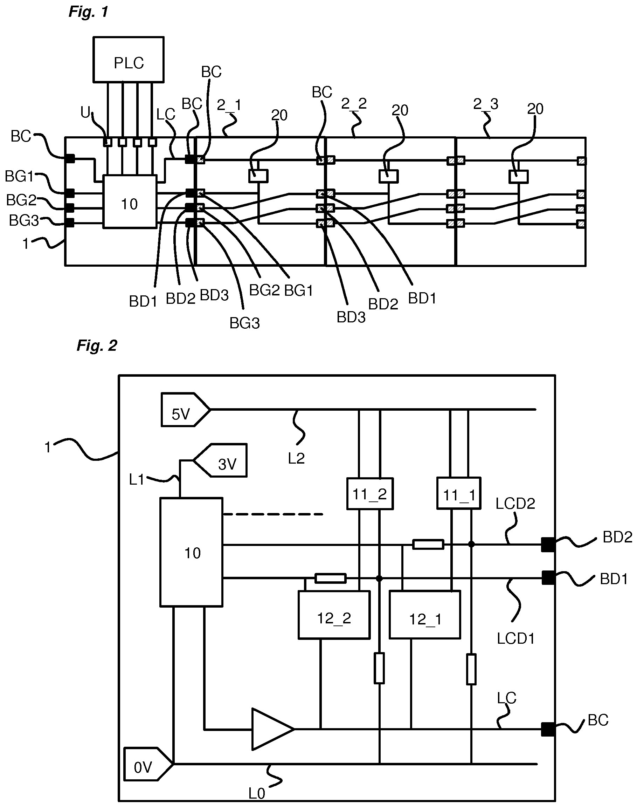

Un système de dialogue homme-machine conforme à l'invention et représenté sur la figure 1 comporte un module de commande 1 principal et plusieurs organes de dialogue homme-machine 2_1, 2_2, 2_3 (référencé 2 de manière générale).

Le module de commande 1 peut être connecté à un contrôleur logique programmable (PLC).

La liaison du module de commande vers le contrôleur logique programmable peut être de type filaire (comme sur la figure 1) ou sans-fil.

Le protocole de communication appliqué entre le module de commande 1 et le contrôleur logique programmable PLC peut être de tous types, par exemple de type Bluetooth, WIFI, Ethernet, ou autres protocoles connus, tels que des protocoles industriels.

Le module de commande 1 comporte un microcontrôleur 10 permettant de lire et d'écrire l'état de chaque organe de dialogue homme-machine 2 et un bloc d'interconnexion destiné à adresser individuellement chaque organe de dialogue homme-machine 2. Le bloc d'interconnexion et le microcontrôleur 10 peuvent être réunis dans un même boîtier ou séparés via une liaison filaire ou sans-fil, l'intelligence du microcontrôleur 10 pouvant être déportée par rapport au bloc d'interconnexion.

Pour fonctionner, le microcontrôleur 10 est destiné à être connecté à une première source d'alimentation fournissant une première tension électrique, par exemple de 3V (générée entre une ligne L1 à un potentiel électrique à 3V et une ligne de référence L0 à 0V).

La première source d'alimentation peut être intégrée dans le boîtier du module de commande 1 et faire partie du module de commande.

Dans la suite de la description, l'emploi de l'expression « module de commande » devra être considéré comme couvrant les deux architectures possibles. Sur les figures annexées, le module de commande est représenté sous la forme d'un boîtier unique intégrant le bloc d'interconnexion et le microcontrôleur 10.

Le module de commande 1 comporte au moins une borne de contact électrique de commun BC connectée au microcontrôleur (éventuellement par l'intermédiaire d'un tampon pour augmenter la puissance du signal) par une ligne de commun LC.

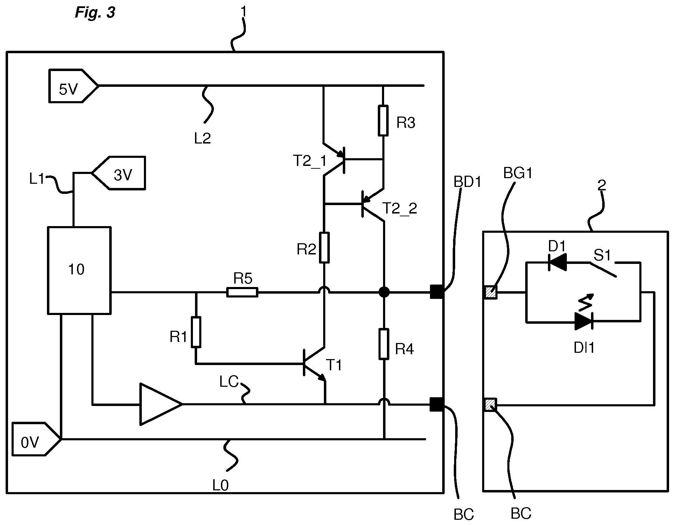

Il peut également comporter une série de bornes de contact électrique dites avals BDi, i allant de 1 à n (avec n supérieur ou égal à 2 - en particulier n = 3 dans l'exemple la figure 1) connectées chacune au microcontrôleur par une ligne de commande distincte. Le module de commande peut également comporter une série de bornes de contact amonts BGi voir figure 1), avec i allant de 1 à n (avec n supérieur ou égal à 2 - en particulier n = 3 dans l'exemple la figure 1) connectées chacune au microcontrôleur par une ligne de commande LCD1, LCD2 distincte. Selon la position du module de commande dans le système, en tête, en queue ou intercalé entre deux organes de dialogue homme-machine, on utilisera les bornes de contact amonts et/ou avals. Sur la figure 1, le module de commande est placé en tête du système, donc seules ses bornes de contact amont sont employées. D'autres architectures sont notamment présentées dans la demande de brevet EP3035166A1 déjà cité ci-dessus. Sur la figure 2, seules deux bornes avals BD1, BD2 et la borne de commun BC ont été représentées, permettant de connecter deux organes de dialogue homme-machine. Et sur les figures 3 à 5B, pour expliquer le principe de l'invention, seules une borne de contact BD1 et la borne de commun sont représentées. La ligne de commun LC est alors associée à la borne de commande et la ligne de commande LCD1 est associée à la borne de contact BD1.

Chaque organe de dialogue homme-machine est connecté entre la ligne de commun et une ligne de commande distincte, dédiée à la commande de l'organe de dialogue homme-machine.

Le module de commande 1 peut également comporter des bornes U (figure 1) lui permettant d'être relié à un système central de commande, par exemple au contrôleur logique programmable (PLC) évoqué ci-dessus, par une liaison filaire. Celles-ci sont également connectées au microcontrôleur 10. Un ou plusieurs modules de communication sans-fil peuvent également être intégrés au module de commande ou connectés à celui-ci, commandés par le microcontrôleur pour échanger des données vers l'extérieur en employant un protocole de communication.

De façon générale, le module de commande 1 selon l'invention est utilisé pour contrôler et commander un ou plusieurs organes de dialogue homme-machine 2. Les organes de dialogue homme-machine sont avantageusement tous identiques.

Chaque organe de dialogue homme-machine 2 comporte un boîtier, une borne de commun et plusieurs bornes, dites amont BGi (avec i compris entre 1 et n et n supérieur ou égal 2 - n=3 sur les figures annexées), et plusieurs bornes, dites avals BDi (avec i compris entre 1 et n et n supérieur ou égal à 2 - n=3 sur les figures annexées). Chaque organe de dialogue homme-machine 2 comporte également un élément fonctionnel 20 composé d'un contact électrique S1 et/ou d'un indicateur de signalisation. Cela signifie qu'un élément fonctionnel 20 peut comporter soit un contact électrique, soit un indicateur de signalisation, soit un contact électrique et un indicateur de signalisation. L'indicateur de signalisation peut être de tous types, lumineux, vibrant ou sonore... Dans la suite de la description et sur les figures, l'indicateur de signalisation sera par exemple un indicateur lumineux DI1. L'indicateur lumineux peut être formé d'une ou plusieurs diodes électroluminescentes.

Dans la suite de la description, nous nous attarderons sur le cas particulier de la commande d'un élément fonctionnel qui comporte à la fois un contact électrique S1 et un indicateur de signalisation (de type lumineux DI1) connectés en parallèle. Bien entendu, il faut comprendre que la solution décrite ci-dessous pourrait s'appliquer à un élément fonctionnel plus simple, ne comportant qu'un seul contact électrique S1 ou qu'un seul indicateur de signalisation.

Selon un aspect particulier de l'invention, les organes de dialogue homme-machine 2 ne comportent aucune intelligence (microprocesseur, circuit électronique ou équivalent) et comportent uniquement, logés dans leur boîtier, cet élément fonctionnel basique et une connectique adaptée respectant le câblage torsadé évoqué ci-dessus.

En référence aux figures annexées, dans chaque organe de dialogue homme-machine 2, le contact électrique S1 et l'indicateur lumineux DI1 en parallèle, sont connectés à la borne de commun BC, à la borne BG1 et à la borne BDn (BD3 sur la figure 1). Chacune des autres bornes BGi (avec i supérieur ou égal à 2) est reliée directement à la borne BDi-1 de cet organe de dialogue, de manière à permettre le transport des signaux d'un organe à un autre.

Une diode D1 est connectée en série avec le contact électrique S1 pour n'autoriser le passage du courant à travers le contact électrique S1 que dans un seul sens.

Selon la position de l'organe de dialogue homme-machine par rapport au module de commande 1, celui-ci sera adressé par une ligne de commande distincte du module de commande 1. Sa position par rapport au module de commande 1 correspond à son adresse. L'organe de dialogue homme-machine 2 ne nécessite donc aucune configuration d'adressage.

Dans une variante de réalisation de l'invention non représentée, les éléments fonctionnels 20 des organes de dialogue homme-machine sont désolidarisés de la partie connectique et chaque organe de dialogue homme-machine peut être relié physiquement à un autre organe de dialogue homme-machine, qui ne lui est pas nécessairement adjacent, par un câble multiconducteurs.

Tous les organes de dialogue homme-machine 2 sont reliés physiquement entre eux et au module de commande 1, soit directement, soit à travers d'autres organes de dialogue adjacents, de sorte que les signaux de contrôle et d'état de chacun de ces organes peuvent être échangés directement avec le module de commande 1. La borne de commun de chaque organe de dialogue homme-machine est connectée sur la ligne de commun LC du module de commande et, grâce au câblage torsadé décrit ci-dessus et généré par l'assemblage des modules, chaque organe de dialogue homme machine est adressable, par le module de commande 1, via une liaison point à point par une ligne de commande distincte. Les organes de dialogue homme-machine 2 peuvent recevoir des commandes de la part du microcontrôleur 10, quelles que soient leurs positions respectives par rapport au module de commande 1.

Selon l'invention, le module de commande 1 est également agencé pour lire et écrire l'état de chaque élément fonctionnel 20 des organes de dialogue homme-machine 2 qui lui sont connectés.

Pour un organe de dialogue homme-machine 2 dont l'élément fonctionnel comporte au moins un contact électrique S1 et un indicateur lumineux DI1 connectés en parallèle entre les mêmes bornes, la lecture et l'écriture ne peuvent être réalisées en même temps.

Le module de commande 1 est ainsi configuré pour appliquer et mettre en œuvre, pour chaque organe de dialogue homme-machine 2, un mode écriture et un mode lecture.

Dans le mode écriture, le module de commande 1 permet d'activer ou de désactiver l'indicateur lumineux de l'organe de dialogue homme-machine adressé.

Dans le mode lecture, le module de commande 1 est configuré pour lire l'état du contact électrique de chaque organe de dialogue homme-machine.

Pour chaque organe de dialogue homme-machine 2, le module de commande 1 comporte un bloc d'alimentation associé.

Les blocs d'alimentation peuvent être logés dans le boîtier du module de commande.

Chaque bloc d'alimentation est commandé par le microcontrôleur 10, pour allumer ou éteindre l'indicateur lumineux DI1 de l'organe de dialogue homme-machine associé 2.

Un bloc d'alimentation est destiné à être connecté à une deuxième source d'alimentation fournissant une deuxième tension, distincte de la première tension, par exemple égale à 5V (générée entre une ligne L2 à un potentiel à 5V et la ligne de référence L0 à 0V).

La deuxième source d'alimentation peut être intégrée dans le boîtier du module de commande 1 et faire partie du module de commande.

Chaque bloc d'alimentation comporte un générateur de courant 11 et un bloc de commande 12 dudit générateur de courant. Sur la figure 2, deux blocs d'alimentation sont représentés pour chacune des deux lignes de commande LCD1 et LCD2. Le premier bloc d'alimentation comporte ainsi son générateur de courant 11_1 et un bloc de commande 12_1 associé et le deuxième bloc d'alimentation comporte son propre générateur de courant 11_2 et un bloc de commande 12_2 associé.

Dans chaque bloc d'alimentation, en référence à la figure 3, le générateur de courant 11 peut comporter deux transistors T2_1, T2_2 et deux résistances R2 et R3. Les deux transistors peuvent être de type PNP.

Le premier transistor T2_1 est agencé de sorte que :
- sa borne émetteur est connectée à la ligne d'alimentation L2 de la deuxième source d'alimentation ;
- sa borne collecteur est connectée au bloc de commande par l'intermédiaire de la résistance R2 ;
- sa base est connectée à la ligne d'alimentation par l'intermédiaire de la résistance R3.

Le deuxième transistor T2_2 est agencé de sorte que :
- sa borne émetteur est connectée à la base du transistor T2_1 ;
- sa borne collecteur est connectée à la ligne de commande LCD1 ;
- sa base est connectée à la borne collecteur du transistor T2_1.

Le bloc de commande comporte un transistor T1. Ce transistor T1 peut être de type NPN.

Le transistor T1 est agencé de sorte que :
- sa borne collecteur est connectée à la résistance R2 ;
- sa borne émetteur est connectée à la ligne de commun LC ;
- sa base est connectée à la ligne de commande LCD1 à travers une résistance R1 incluse dans le bloc de commande.

Une résistance R5 est connectée en série sur la ligne de commande.

La résistance R1 permet d'assurer la commande du transistor T1 lorsqu'une tension suffisante est appliquée sur la base.

La résistance R5 est une résistance de lecture permettant de générer une tension de lecture lors de la lecture de l'état du contact électrique S1 dans le mode lecture.

Une résistance R4 est connectée entre la ligne de commande LCD1 et la ligne de référence L0 à 0V. Elle forme une résistance dite de rappel (dite "pull-up" ou "pull-down").

Pour passer du mode lecture au mode écriture et inversement, le microcontrôleur 10 change le potentiel électrique appliqué sur la ligne de commun LC. Comme décrit ci-dessus, le mode lecture et le mode écriture ne peuvent être appliqués simultanément. Le mode lecture sera appliqué sur une durée particulièrement courte par rapport au mode écriture, l'indicateur lumineux DI1 devant être désactivé pendant ce mode lecture. Le mode écriture occupera de 50% à 90% de la durée totale (durée totale=durée en mode lecture+durée en mode écriture).

Le principe de l'invention est décrit ci-dessous en liaison avec les figures annexées, pour la commande d'un seul organe de dialogue homme-machine. Les différents potentiels électriques générés sont indiqués sur les figures décrites ci-dessous, selon le mode de fonctionnement appliqué.

A titre d'exemple, les données suivantes ont été employées :
R1=10 kOhms, R2=10 kOhms, R3= *47 Ohms,* R4=*6 kOhms,* R5=*40 kOhms*

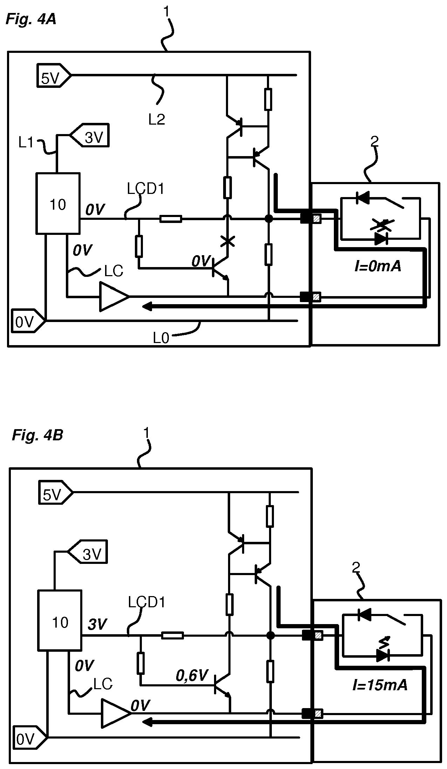

### - Mode écriture - Contact électrique ouvert - Figures 4A et 4B

Pour appliquer le mode écriture, le microcontrôleur 10 met le potentiel de la ligne de commun à 0V.

Dans cette configuration, le microcontrôleur 10 peut commander l'allumage ou l'extinction de l'indicateur lumineux DI1 en appliquant un potentiel de 0V ou respectivement de 3V sur la ligne de commande LCD1 de l'organe de dialogue homme-machine. La ligne de commande est donc employée en écriture par le microcontrôleur qui lui affecte un potentiel électrique donné pour appliquer le mode écriture.

Sur la figure 4A, une tension nulle (à 0V) est ainsi générée entre la ligne de commande LCD1 et la ligne de commun LC. Le transistor T1 est inactif, rendant le générateur de courant 12 non fonctionnel. Aucun courant ne traverse donc l'indicateur lumineux DI1 qui reste éteint.

Sur la figure 4B, une tension égale à 3V est générée entre la ligne de commande LCD1 et la ligne de commun LC. Grâce à la résistance R1, une commande suffisante est appliquée sur la base du transistor T1, entraînant son activation et donc le déclenchement du générateur de courant 11.

Le générateur de courant 11 fournit alors un courant suffisant à partir de la deuxième source d'alimentation pour entraîner l'allumage de l'indicateur lumineux.

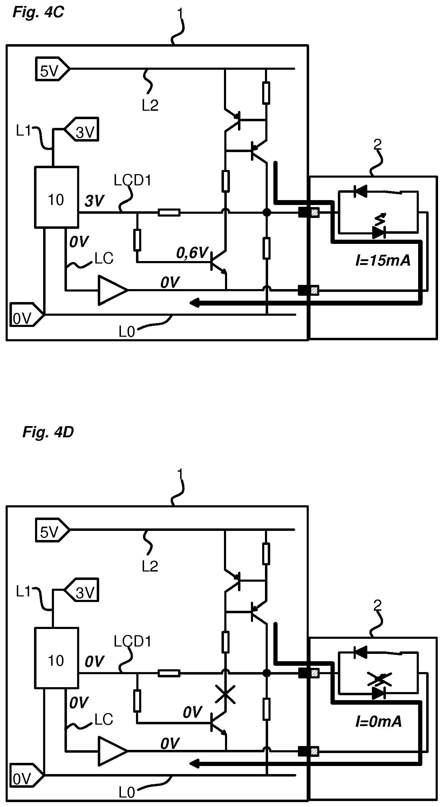

### - Mode écriture - Contact électrique fermé - Figures 4C et 4D

Dans cette configuration, le principe de fonctionnement est identique au précédent.

Même si le contact électrique S1 est fermé, la diode D1 positionnée en série avec le contact empêche le courant de le traverser (permettant ainsi d'éviter de mettre l'indicateur lumineux DI1 en court-circuit et donc d'interférer dans le mode écriture).

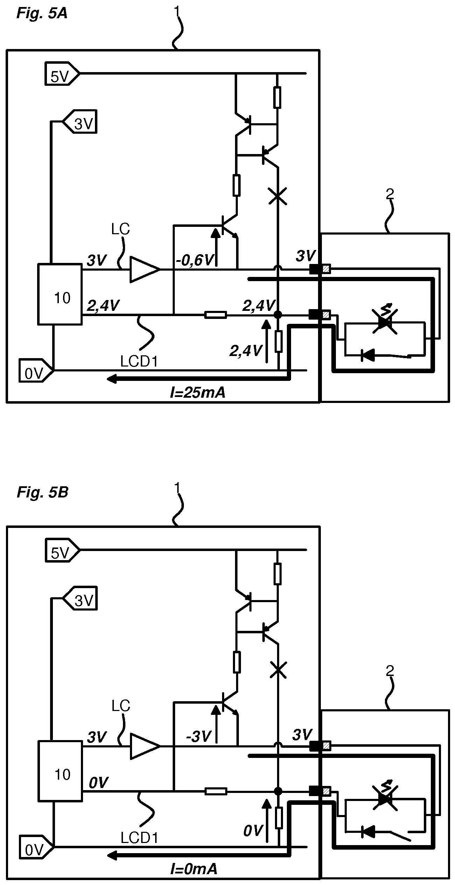

### - Mode lecture - Indicateur éteint - Figures 5A et 5B

Pour appliquer le mode lecture, le microcontrôleur 10 change le potentiel électrique de la ligne de commun. A partir de la première source d'alimentation, il met le potentiel électrique de la ligne de commun à 3V.

La tension entre la ligne de commande et la ligne de commun est alors de -3V.

La borne émetteur du transistor T1 est à alors au potentiel de 3V, ne permettant pas l'activation du générateur de courant 11 et donc l'allumage de l'indicateur lumineux DI1.

Dans le mode lecture, la borne de commande est alors en configuration entrée, c'est-à-dire en lecture par le microcontrôleur qui vient lire le potentiel électrique obtenu sur la ligne de commande lors du passage en mode lecture.

Selon le niveau du potentiel électrique reçu sur cette entrée, le microcontrôleur 10 détermine si le contact est ouvert ou fermé.

Un potentiel électrique de 0V généré sur la ligne de commande LCD1 et reçu par le microcontrôleur 10 sur son entrée correspondante signifie que le contact électrique S1 est ouvert.

Un potentiel électrique de 2,4V généré sur la ligne de commande LCD1 et reçu par le microcontrôleur 10 sur l'entrée correspondante signifie que le contact électrique S1 est fermé. Une déperdition de 0,6V est causée par la diode D1 connectée en série avec le contact électrique S1.

On comprend de la description ci-dessus que le système et son module de commande 1 adapté présentent certains avantages, parmi lesquels :
- Un système simple disposant d'organes de dialogue homme-machine 2 simples, sans intelligence et tous identiques, quelle que soit la fonction employée (contact électrique et/ou voyant de signalisation) ;
- Un module de commande 1 permettant de gérer les organes de dialogue homme-machine de manière fiable et à l'aide d'un processus de commande simple, en utilisant un minimum de câblage.

## Revendications

1. Module de commande pour système de dialogue homme-machine, ledit système comprenant plusieurs organes de dialogue homme-machine (2), chaque organe de dialogue homme-machine (2) comprenant un élément fonctionnel qui comporte au moins un contact électrique (S1) et/ou un indicateur de signalisation (DI1),
- ledit module de commande (1) comprenant un microcontrôleur (10) destiné à être connecté à une première source d'alimentation, une ligne de commun (LC) destinée à relier le microcontrôleur (10) à tous les éléments fonctionnels et plusieurs lignes de commande (LCD1, LCD2) destinées chacune à relier le microcontrôleur (10) à un élément fonctionnel d'un organe de dialogue homme-machine distinct,
- ledit module de commande (1) étant configuré pour fonctionner dans un mode écriture pour attribuer un état à chaque indicateur de signalisation de chaque organe de dialogue homme-machine et dans un mode lecture pour lire un état du contact électrique de chaque organe de dialogue homme-machine,
- ledit mode écriture étant appliqué en plaçant ladite ligne de commun (LC) à un premier potentiel électrique et ledit mode lecture étant appliqué en plaçant ladite ligne de commun (LC) à un deuxième potentiel électrique, distinct du premier potentiel électrique,
- ledit microcontrôleur (10) étant configuré pour lire l'état du contact électrique (S1) de chaque organe de dialogue homme-machine sur la ligne de commande associée dans ledit mode lecture
**caractérisé en ce que** le module de commande comporte :
- pour chaque ligne de commande d'un organe de dialogue homme-machine, au moins un bloc d'alimentation destiné à être relié à une deuxième source d'alimentation et connecté à ladite ligne de commande dudit organe de dialogue homme-machine,
- ledit microcontrôleur (10) étant configuré pour activer ou désactiver chaque bloc d'alimentation dans ledit mode écriture en changeant le potentiel électrique affecté à la ligne de commande associée.

2. Module de commande selon la revendication 1, **caractérisé en ce que** le bloc d'alimentation comporte un générateur de courant (11) et un bloc de commande (12) dudit générateur de courant, connecté entre le générateur de courant et la ligne de commande associée.

3. Module de commande selon la revendication 1, **caractérisé en ce que** le bloc de commande comporte un transistor présentant une base connectée à la ligne de commande à travers une résistance (R1).

4. Module de commande selon la revendication 2 ou 3, **caractérisé en ce que** le générateur de courant (11) est connecté entre deux lignes d'alimentation formant la deuxième source d'alimentation, une première ligne d'alimentation (L2) à potentiel électrique non nul et une ligne de référence (L0) à potentiel électrique nul.

5. Module de commande selon la revendication 4, **caractérisé en ce qu'**il comporte une résistance de rappel (R4) connectée à la ligne de commande (LCD1) et à la ligne de référence (L0).

6. Module de commande selon la revendication 4, **caractérisé en ce que** le microcontrôleur (10) est connecté à ladite ligne de référence (L0) et à une deuxième ligne d'alimentation (L1), formant la première source d'alimentation électrique.

7. Module de commande selon l'une des revendications 1 à 5, **caractérisé en ce qu'**il comporte une résistance (R5) dite de lecture placée en série sur la ligne de commande.

8. Système de dialogue homme-machine comprenant un module de commande (1) et plusieurs organes de dialogue homme-machine (2) connectés audit module de commande, chaque organe de dialogue homme-machine comprenant un élément fonctionnel (20) doté d'un contact électrique (S1) et/ou d'un indicateur de signalisation (DI1), entre une première borne connectée à une ligne de commun (LC) et une deuxième borne connectée à une ligne de commande (LCD1) distincte générée par ledit module de commande (1), **caractérisé en ce que** le module de commande (1) est conforme à celui défini dans l'une des revendications 1 à 7.

9. Système selon la revendication 8, **caractérisé en ce que** les organes de dialogue homme-machine (2) sont connectés audit module de commande (1) par un câblage torsadé.

10. Système selon la revendication 8 ou 9, **caractérisé en ce que** l'indicateur (DI1) est de type lumineux et comporte au moins une diode électroluminescente.

11. Système selon l'une des revendications 8 à 10, caractérisé en que chaque organe de dialogue homme-machine comporte une diode (D1) connectée en série avec ledit contact électrique (S1).

## Patentansprüche

1. Steuerungsmodul für ein Mensch-Maschine-Dialogsystem, wobei das System mehrere Mensch-Maschine-Dialogorgane (2) umfasst, wobei jedes Mensch-Maschine-Dialogorgan (2) ein Funktionselement umfasst, das mindestens einen elektrischen Kontakt (S1) und/oder einen Meldeanzeiger (DI1) beinhaltet,
- wobei das Steuerungsmodul (1) einen Mikrocontroller (10), der dazu bestimmt ist, an eine erste Versorgungsquelle angeschlossen zu werden, eine gemeinsame Leitung (LC), die dazu bestimmt ist, den Mikrocontroller (10) mit allen Funktionselementen zu verbinden, und mehrere Steuerleitungen (LCD1, LCD2), die jeweils dazu bestimmt sind, den Mikrocontroller (10) mit einem Funktionselement eines getrennten Mensch-Maschine-Dialogorgans zu verbinden, umfasst,
- wobei das Steuerungsmodul (1) dazu konfiguriert ist, in einem Schreibmodus zu arbeiten, um jedem Meldeanzeiger jedes Mensch-Maschine-Dialogorgans einen Zustand zuzuordnen, und in einem Lesemodus, um einen Zustand des elektrischen Kontakts jedes Mensch-Maschine-Dialogorgans zu lesen,
- wobei der Schreibmodus angewandt wird, indem die gemeinsame Leitung (LC) an ein erstes elektrisches Potenzial angelegt wird, und der Lesemodus angewandt wird, indem die gemeinsame Leitung (LC) an ein zweites elektrisches Potenzial angelegt wird, das vom ersten elektrischen Potenzial getrennt ist,
- wobei der Mikrocontroller (10) dazu konfiguriert ist, den Zustand des elektrischen Kontakts (S1) jedes Mensch-Maschine-Dialogorgans über die zugeordnete Steuerleitung im Lesemodus zu lesen,
**dadurch gekennzeichnet, dass** das Steuerungsmodul beinhaltet:
- für jede Steuerleitung eines Mensch-Maschine-Dialogorgans mindestens einen Versorgungsblock, der dazu bestimmt ist, mit einer zweiten Versorgungsquelle verbunden zu werden, und an die Steuerleitung des Mensch-Maschine-Dialogorgans angeschlossen ist,
- wobei der Mikrocontroller (10) dazu konfiguriert ist, jeden Versorgungsblock im Schreibmodus zu aktivieren oder zu deaktivieren, indem er das der zugeordneten Steuerleitung zugewiesene elektrische Potenzial ändert.

2. Steuerungsmodul nach Anspruch 1, **dadurch gekennzeichnet, dass** der Versorgungsblock einen Stromerzeuger (11) und einen Steuerungsblock (12) des Stromerzeugers aufweist, der zwischen dem Stromerzeuger und der zugeordneten Steuerleitung angeschlossen ist.

3. Steuerungsmodul nach Anspruch 1, **dadurch gekennzeichnet, dass** der Steuerungsblock einen Transistor beinhaltet, der eine Basis aufweist, die über einen Widerstand (R1) an die Steuerleitung angeschlossen ist.

4. Steuerungsmodul nach Anspruch 2 oder 3, **dadurch gekennzeichnet, dass** der Stromerzeuger (11) zwischen zwei Versorgungsleitungen angeschlossen ist, welche die zweite Versorgungsquelle bilden, einer ersten Versorgungsleitung (L2) mit einem elektrischen Potenzial ungleich null und einer Bezugsleitung (L0) mit einem elektrischen Potenzial gleich null.

5. Steuerungsmodul nach Anspruch 4, **dadurch gekennzeichnet, dass** es einen Pull-down-Widerstand (R4) umfasst, der an die Steuerleitung (LCD1) und an die Bezugsleitung (L0) angeschlossen ist.

6. Steuerungsmodul nach Anspruch 4, **dadurch gekennzeichnet, dass** der Mikrocontroller (10) an die Bezugsleitung (L0) und an eine zweite Versorgungsleitung (L1) angeschlossen ist, die die erste Stromversorgungsquelle bildet.

7. Steuerungsmodul nach einem der Ansprüche 1 bis 5, **dadurch gekennzeichnet, dass** es einen Widerstand (R5), Lesewiderstand genannt, umfasst, der in Reihe mit der Steuerleitung geschaltet ist.

8. Mensch-Maschine-Dialogsystem, umfassend ein Steuerungsmodul (1) und mehrere Mensch-Maschine-Dialogorgane (2), die an das Steuerungsmodul angeschlossen sind, wobei jedes Mensch-Maschine-Dialogorgan ein Funktionselement (20) umfasst, das mit einem elektrischen Kontakt (S1) und/oder einem Meldeanzeiger (DI1) versehen ist, zwischen einer ersten Klemme, die an eine gemeinsame Leitung (LC) angeschlossen ist, und einer zweiten Klemme, die an eine getrennte Steuerleitung (LCD1) angeschlossen ist, die vom Steuerungsmodul (1) erzeugt wird, **dadurch gekennzeichnet, dass** das Steuerungsmodul (1) mit dem in einem der Ansprüche 1 bis 7 definierten übereinstimmt.

9. System nach Anspruch 8, **dadurch gekennzeichnet, dass** die Mensch-Maschine-Dialogorgane (2) an das Steuerungsmodul (1) über eine verdrillte Verkabelung angeschlossen sind.

10. System nach Anspruch 8 oder 9, **dadurch gekennzeichnet, dass** der Anzeiger (DI1) ein Leuchtanzeiger ist und mindestens eine Leuchtdiode beinhaltet.

11. System nach einem der Ansprüche 8 bis 10, **dadurch gekennzeichnet, dass** jedes Mensch-Maschine-Dialogorgan eine Diode (D1) beinhaltet, die in Reihe zu dem elektrischen Kontakt (S1) geschaltet ist.

## Claims

1. Control module for a human-machine dialogue system, said system including a plurality of human-machine dialogue members (2), each human-machine dialogue member (2) comprising a functional element that includes at least one electrical contact (S1) and/or a signalling indicator (DI1);
- said control module (1) comprising a microcontroller (10) that is designed to be connected to a first power supply source, a common line (LC) that is designed to link the microcontroller (10) to all of the functional elements and a plurality of control lines (LCD1, LCD2), each designed to link the microcontroller (10) to a functional element of a distinct human-machine dialogue member;
- said control module (1) being configured to operate in a write mode to attribute a state to each signalling indicator of each human-machine dialogue member and in a read mode to read a state of the electrical contact of each human-machine dialogue member;
- said write mode being applied by placing said common line (LC) at a first electrical potential and said read mode being applied by placing said common line (LC) at a second electrical potential, distinct from the first electrical potential,
- said microcontroller (10) being configured to read the state of the electrical contact (S1) of each human-machine dialogue member on the associated control line in said read mode,
**characterized in that** the control module includes:
- for each control line of a human-machine dialogue member, at least one power supply block that is designed to be linked to a second power supply source and connected to said control line of said human-machine dialogue member;
- said microcontroller (10) being configured to activate or to deactivate each power supply block in said write mode by changing the electrical potential assigned to the associated control line.

2. Control module according to Claim 1, **characterized in that** the power supply block includes a current generator (11) and a control block (12) for controlling said current generator, connected between the current generator and the associated control line.

3. Control module according to Claim 1, **characterized in that** the control block includes a transistor having a base that is connected to the control line via a resistor (R1).

4. Control module according to Claim 2 or 3, **characterized in that** the current generator (11) is connected between two power supply lines forming the second power supply source, a first power supply line (L2) at nonzero potential and a reference line (L0) at zero potential.

5. Control module according to Claim 4, **characterized in that** it includes a pull-down resistor (R4) that is connected to the control line (LCD1) and to the reference line (L0).

6. Control module according to Claim 4, **characterized in that** the microcontroller (10) is connected to said reference line (L0) and to a second power supply line (L1), forming the first electrical power supply source.

7. Control module according to one of Claims 1 to 5, **characterized in that** it includes a resistor (R5), referred to as the read resistor, placed in series on the control line.

8. Human-machine dialogue system comprising a control module (1) and a plurality of human-machine dialogue members (2) that are connected to said control module, each human-machine dialogue member comprising a functional element (20) provided with an electrical contact (S1) and/or a signalling indicator (DI1), between a first terminal that is connected to a common line (LC) and a second terminal that is connected to a distinct control line (LCD1) generated by said control module (1), **characterized in that** the control module (1) is in accordance with that defined in one of Claims 1 to 7.

9. System according to Claim 8, **characterized in that** the human-machine dialogue members (2) are connected to said control module (1) by twisted wiring.

10. System according to Claim 8 or 9, **characterized in that** the indicator (DI1) is a light indicator and includes at least one light-emitting diode.

11. System according to one of Claims 8 to 10, **characterized in that** each human-machine dialogue member includes a diode (D1) that is connected in series with said electrical contact (S1).
